# EUROPEAN PATENT APPLICATION

(11) **EP 4 574 956 A1**
(43) Date of publication of application: **25.06.2025**
(21) Application number: 24218628.6
(22) Date of filing: 10.12.2024
(51) Int. Cl.: C11D 3/37, C11D 3/386, C11D 17/00, C11D 1/04, C11D 1/14, C11D 1/22, C11D 1/83

(54) **LIQUID DETERGENT COMPOSITIONS**

(30) Priority: 20.12.2023 WO PCT/CN2023/140346
(71) Applicant: The Procter & Gamble Company, Cincinnati, OH 45202 (US)
(72) Inventor: BIANCHETTI, Giulia Ottavia, 1853 Strombeek-Bever (BE); REN, Xiaoyi, Beijing, 101312 (CN); TANG, Ming, Beijing, 101312 (CN)
(74) Representative: P&G Patent Belgium UK

(57) **Abstract**

The need for liquid laundry detergent compositions comprising enzymes exhibiting endo beta- 1,4-glucanase activity, which provides improved grease cleaning, while also providing improved stability of the enzyme, while being formulated with little or no fatty acid, can be met by formulating the composition using a high fraction of sulphonate anionic surfactant and a vinylpyrrolidone polymer.

## Description

### FIELD OF THE INVENTION

Liquid laundry detergent compositions or unit dose articles comprising them.

### BACKGROUND OF THE INVENTION

Liquid laundry detergent compositions typically comprise enzymes to improve cleaning, including stain removal, and provide other benefits such as colour care. A particularly desired class of detersive enzymes are enzymes exhibiting endo-beta-1,4-glucanase activity.

Such endoglucanases (EC 3.2.1.4) breakdown β-1,4-glycosidic bonds in cellulose chains. In doing so, they have been found to provide improved stain removal, in addition to fabric softening and color care, in particular through "biopolishing" cellulose-containing polymers. Biopolishing such fibres entails enzymatic removal of fibrils on the fibres, leading to easier removal of stains, smoother and softer fibre surfaces, and less dispersion of light leading to less dulling of the fibre colours.

However, such enzymes exhibiting endo-beta-1,4-glucanase activity can be challenging to stabilise in detergent compositions, especially liquid detergent compositions.

Improved grease cleaning can be achieved by formulating the liquid detergent composition using anionic surfactant which is rich in sulfonate anionic surfactant. However, it has further been found that liquid detergent compositions comprising high levels of sulfonate anionic can also have deleterious effect on the stability of enzymes exhibiting endo-beta-1,4-glucanase activity.

Fatty acids can have both positive and negative effects on the efficacy of enzymes in detergent compositions. Fatty acids can act as stabilizing agents, helping to protect the enzyme from denaturation or inactivation, for instance, by forming a protective layer around the enzyme, shielding it from harsh conditions. However, fatty acids may also have inhibitory effects on the performance of enzymes exhibiting endo-beta-1,4-glucanase activity, including cellulases. They can interfere with the enzyme's active site or disrupt its structure, leading to reduced activity or stability. The specific impact can depend on the type and concentration of fatty acids present, as well as the characteristics of the enzyme itself. Moreover, high levels of fatty acid promote lamellar phase formation in detergent compositions, leading to a reduction in phase stability. Fatty acids typically also lead to a less desired product odour.

As such, a need remains for maximizing the performance from enzymes exhibiting endo-beta-1,4-glucanase activity, without formulating using high levels of fatty acid, by providing improved stability of the enzyme exhibiting endo-beta-1,4-glucanase activity in the liquid detergent composition.

US4285841A relates to builder-free highly concentrated homogeneous fatty acid containing liquid detergent compositions, the surface-active system in addition to the fatty acids also contains substantial amounts of anionic sulfonate/sulfate detergents and nonionic ethoxylates. US5804543A discloses detergent compositions and methods which are suitable for washing colored fabrics in aqueous washing solution with little or no transfer of dye between fabrics. The compositions utilized comprise certain nil-LAS detersive surfactants, detergent builder and certain selected polymeric dye transfer inhibiting agents. The detersive surfactants used must comprise alkyl ether sulfates and certain types of nonionic surfactants (polyhydroxy fatty acid amides and/or alcohol ethoxylates). US5919271A relates to a detergent composition which comprises a nonionic polysaccharide ether, a surfactant, a dye transfer inhibition agent, a cellulase enzyme and a chelating agent. US5919271A teaches various granular detergent compositions which comprise high levels of sulfonate surfactant and cellulase. WO1992018598A relates to compositions which comprise conventional detergency ingredients, an alkaline cellulase and a polyvinylpyrrolidone, the combination of both these ingredients providing superior fabric colour care. WO1995003388A relates to detergent compositions comprising a polymer selected from N-vinylimidazole N-vinylpyrrolidone copolymers characterized in that said polymer has an average molecular weight range from 5,000 to 50,000. WO2015112339A relates to detergents comprising optical brightener having high ClogP, dye transfer inhibitor and enzyme and having a pH in deionised water for a 1wt% solution greater than 5, and methods of treating a textile comprising washing in an aqueous liquor containing such detergents.

### SUMMARY OF THE INVENTION

The present invention relates to a liquid laundry detergent composition comprising: a surfactant system wherein the surfactant system comprises anionic surfactant, wherein the anionic surfactant comprises sulfonate anionic surfactant, wherein the sulfonate anionic surfactant is present at a level of at least 40% by weight of the surfactant system, and wherein the surfactant system comprises less than 3.0 % by weight of the composition of fatty acid; at least one enzyme exhibiting endo beta-1,4-glucanase activity; and a vinylpyrrolidone polymer selected from: polyvinylpyrrolidone (PVP), copolymers of vinylpyrrolidone and vinylimidazole (PVP/PVI), and mixtures thereof.

### DETAILED DESCRIPTION OF THE INVENTION

The detergent compositions of the present invention have been found to provide good grease cleaning, while also providing good stability of enzymes exhibiting endo beta-1,4-glucanase activity contained therein.

Unless otherwise noted, all component or composition levels are in reference to the active portion of that component or composition, and are exclusive of impurities, for example, residual solvents or by-products, which may be present in commercially available sources of such components or compositions.

All percentages and ratios are calculated by weight unless otherwise indicated. All percentages and ratios are calculated based on the total composition unless otherwise indicated.

All measurements are performed at 25°C unless otherwise specified.

As used herein, the articles including "a" and "an" when used in a claim, are understood to mean one or more of what is claimed or described.

### Laundry detergent composition:

The laundry detergent composition can be in any suitable form, such as liquid, paste, granular, solid, powder, or in conjunction with a carrier such as a substrate. Preferred laundry detergent compositions are either liquid or granular, with liquid being most preferred.

As used herein, "liquid detergent composition" refers to liquid detergent composition, which is fluid, and preferably capable of wetting and cleaning a fabric, e.g., clothing in a domestic washing machine. As used herein, "laundry detergent composition" refers to compositions suitable for washing clothes. The composition can include solids or gases in suitably subdivided form, but the overall composition excludes product forms which are non-fluid overall, such as tablets or granules. The liquid laundry detergent composition preferably has a density in the range from 0.9 to 1.3 grams per cubic centimetre, more specifically from 1.00 to 1.10 grams per cubic centimetre, excluding any solid additives but including any bubbles, if present.

The composition can be an aqueous liquid laundry detergent composition. For such aqueous liquid laundry detergent compositions, the water content can be present at a level of from 5.0 % to 95 %, preferably from 25 % to 90 %, more preferably from 50 % to 85 % by weight of the liquid detergent composition.

The pH range of the detergent composition is from 6.0 to 8.9, preferably from pH 7 to 8.8.

The detergent composition can also be encapsulated in a water-soluble film, to form a unit dose article. Such unit dose articles comprise a detergent composition of the present invention, wherein the detergent composition comprises less than 20%, preferably less than 15%, more preferably less than 10% by weight of water, and the detergent composition is enclosed in a water-soluble or dispersible film. Such unit-dose articles can be formed using any means known in the art. Suitable unit-dose articles can comprise one compartment, wherein the compartment comprises the liquid laundry detergent composition. Alternatively, the unit-dose articles can be multi-compartment unit-dose articles, wherein at least one compartment comprises the liquid laundry detergent composition.

### Surfactant system

The laundry composition comprises the surfactant system at a level of from 2.5 % to 60 %, preferably from 5.0 % to 25 %, more preferably from 7.0 % to 15 % by weight of the composition.

Suitable surfactants as used herein means surfactants or mixtures of surfactants that provide cleaning, stain removing, or laundering benefit to soiled material. Suitable detersive surfactants can be: anionic surfactant, nonionic surfactant, zwitterionic surfactant, and combinations thereof.

The surfactant system comprises branched nonionic surfactant. The surfactant system can further comprise a surfactant selected from the group consisting of: anionic surfactant, amphoteric surfactant, and mixtures thereof. As such, the surfactant system can comprise a combination of anionic and nonionic surfactant, more preferably a combination of anionic surfactant, nonionic surfactant, and amphoteric surfactant.

Preferably surfactants comprising saturated alkyl chains are used.

### Anionic surfactant

The surfactant system comprises anionic surfactant. The anionic surfactant can be at a level of from 1.4% to 52%, preferably from 4.4% to 20%, more preferably from 5.9% to 11.5% of the liquid laundry detergent composition.

The sulfonate anionic surfactant is present at a level of at least 40%, preferably from 40% to 90%, more preferably from 50% to 70% by weight of the surfactant system. The sulfonate anionic surfactant can be present at a level of at least 55%, preferably from 60% to 90%, more preferably from 70% to 85% by weight of the anionic surfactant.

Anionic sulphonate or sulphonic acid surfactants suitable for use herein include the acid and salt forms of alkylbenzene sulphonates, alkyl ester sulphonates, alkane sulphonates, alkyl sulphonated polycarboxylic acids, and mixtures thereof. Suitable anionic sulphonate or sulphonic acid surfactants include: C5-C20 alkylbenzene sulphonates, more preferably C10-C16 alkylbenzene sulphonates, more preferably C11-C13 alkylbenzene sulphonates, C5-C20 alkyl ester sulphonates, C6-C22 primary or secondary alkane sulphonates, C5-C20 sulphonated polycarboxylic acids, and any mixtures thereof, but preferably C11-C13 alkylbenzene sulphonates. The aforementioned surfactants can vary widely in their 2-phenyl isomer content.

A combination of linear alkyl benzene sulphonate and alkyl sulphate surfactant is particularly preferred, especially for improving stain removal. As such, the anionic surfactant preferably comprises sulfonate anionic surfactant and alkyl sulfate anionic surfactant, preferably wherein the sulfonate anionic surfactant and alkyl sulfate anionic surfactant are present in a weight ratio of from 55:45 to 99:1, more preferably from 60:40 to 95:5, and most preferably from 70:30 to 85:15. The liquid laundry detergent composition preferably comprises the sulfonate anionic surfactant and alkyl sulfate anionic surfactant at a level of at least 50%, preferably at least 70%, more preferably at least 90% by weight of the anionic surfactant.

Anionic sulphate salts suitable for use in the compositions of the invention include the primary and secondary alkyl sulphates, having a linear or branched alkyl or alkenyl moiety having from 9 to 22 carbon atoms or more preferably 12 to 18 carbon atoms. Also useful are beta-branched alkyl sulphate surfactants or mixtures of commercially available materials, having a weight average (of the surfactant or the mixture) branching degree of at least 50%.

Mid-chain branched alkyl sulphates or sulphonates are also suitable anionic surfactants for use in the compositions of the invention. Preferred are the C5-C22, preferably C10-C20 mid-chain branched alkyl primary sulphates. When mixtures are used, a suitable average total number of carbon atoms for the alkyl moieties is preferably within the range of from greater than 14.5 to 17.5. Preferred mono-methyl-branched primary alkyl sulphates are selected from the group consisting of the 3-methyl to 13-methyl pentadecanol sulphates, the corresponding hexadecanol sulphates, and mixtures thereof. Dimethyl derivatives or other biodegradable alkyl sulphates having light branching can similarly be used.

When used, the alkyl alkoxylated sulphate surfactant can be a blend of one or more alkyl ethoxylated sulphates. Suitable alkyl alkoxylated sulphates include C10-C18 alkyl ethoxylated sulphates, more preferably C12-C15 alkyl ethoxylated sulphates. The anionic surfactant can comprise alkyl sulphate surfactant, wherein the alkyl sulphate surfactant has an average degree of ethoxylation of from 0.5 to 8.0, preferably from 1.0 to 5.0, more preferably from 2.0 to 3.5.

Alternatively, the anionic surfactant can comprise alkyl sulphate surfactant, wherein the alkyl sulphate surfactant has a low degree of ethoxylation, having an average degree of ethoxylation of less than 0.5, preferably less than 0.1, and more preferably is free of ethoxylation. Preferred low ethoxylation alkyl sulphate surfactants do not comprise any further alkoxylation. Preferred low ethoxylation alkyl sulphate surfactants comprise branched alkyl sulphate surfactant. The branched alkyl sulphate surfactant can comprise at least 20%, preferably from 60% to 100%, more preferably from 80% to 90% by weight of the alkyl chains of the branched alkyl sulphate surfactant of 2-branched alkyl chains. Such branched alkyl sulphates with 2-branched alkyl chains can also be described as 2-alkyl alkanol sulphates, or 2-alkyl alkyl sulphates. The branched alkyl sulphates can be neutralized by sodium, potassium, magnesium, lithium, calcium, ammonium, or any suitable amines, such as, but not limited to monoethanolamine, triethanolamine and monoisopropanolamine, or by mixtures of any of the neutralizing metals or amines. Suitable branched alkyl sulphate surfactants can comprise alkyl chains comprising from 10 to 18 carbon atoms (C10 to C18) or from 12 to 15 carbon atoms (C12 to C15), with 13 to 15 carbon atoms (C13 to C15) being most preferred. The branched alkyl sulphate surfactant can be produced using processes which comprise a hydroformylation reaction in order to provide the desired levels of 2-branching. Particularly preferred branched alkyl sulphate surfactants comprise 2-branching, wherein the 2-branching comprises from 20% to 80%, preferably from 30% to 65%, more preferably from 40% to 50% by weight of the 2-branching of methyl branching, ethyl branching, and mixtures thereof.

Suitable low ethoxylated branched alkyl sulphate surfactants can be derived from alkyl alcohols such as Lial^{®} 145, Isalchem^{®} 145, both supplied by Sasol, optionally blending with other alkyl alcohols in order to achieve the desired branching distributions.

The surfactant system comprises less than 3.0 %, preferably less than 2.0%, more preferably from 0.5% to 1.5% by weight of the composition of fatty acid.

However, by nature, every anionic surfactant known in the art of detergent compositions may be used, such as disclosed in "Surfactant Science Series", Vol. 7, edited by W. M. Linfield, Marcel Dekker. Other suitable anionic surfactants for use herein include fatty methyl ester sulphonates and/or alkyl polyalkoxylated carboxylates, for example, alkyl ethoxylated carboxylates (AEC).

The anionic surfactants are typically present in the form of their salts with alkanolamines or alkali metals such as sodium and potassium.

### Amphoteric and/or zwitterionic surfactant

The surfactant system can comprise amphoteric and/or zwitterionic surfactant at a level of from 0.1% to 2.0%, preferably from 0.1% to 1.0%, more preferably from 0.1% to 0.5% by weight of the liquid laundry detergent composition.

Suitable amphoteric surfactants include amine oxide surfactants. Amine oxide surfactants are amine oxides having the following formula : R₁R₂R₃NO wherein R₁ is an hydrocarbon chain comprising from 1 to 30 carbon atoms, preferably from 6 to 20, more preferably from 8 to 16 and wherein R₂ and R₃ are independently saturated or unsaturated, substituted or unsubstituted, linear or branched hydrocarbon chains comprising from 1 to 4 carbon atoms, preferably from 1 to 3 carbon atoms, and more preferably are methyl groups. R₁ may be a saturated or unsaturated, substituted or unsubstituted linear or branched hydrocarbon chain.

Suitable amine oxides for use herein are for instance preferably C₁₂-C₁₄ dimethyl amine oxide (lauryl dimethylamine oxide), commercially available from Albright & Wilson, C₁₂-C₁₄ amine oxides commercially available under the trade name Genaminox^{®} LA from Clariant or AROMOX^{®} DMC from AKZO Nobel.

Suitable amphoteric or zwitterionic detersive surfactants include those which are known for use in hair care or other personal care cleansing. Non-limiting examples of suitable zwitterionic or amphoteric surfactants are described in U.S. Pat. Nos. 5,104,646, 5,106,609. Suitable amphoteric detersive surfactants include those surfactants broadly described as derivatives of aliphatic secondary and tertiary amines in which the aliphatic radical can be straight or branched chain and wherein one of the aliphatic substituents contains from 8 to 18 carbon atoms and one contains an anionic group such as carboxy, sulphonate, sulphate, phosphate, or phosphonate. Suitable amphoteric detersive surfactants for use in the present invention include, but are not limited to: cocoamphoacetate, cocoamphodiacetate, lauroamphoacetate, lauroamphodiacetate, and mixtures thereof.

### Nonionic surfactant

The surfactant system can comprise nonionic surfactant. The level of nonionic surfactant in the liquid detergent composition can be present at a level of less than 5.0%, preferably from 0.5% to 4.0%, more preferably form 1.0% to 3.0% by weight of the composition.

The nonionic surfactant is preferably selected from alkoxylated alkyl alcohol nonionic surfactant, alkyl polyglucoside, and mixtures thereof, more preferably wherein the nonionic surfactant comprises alkyl polyglucoside nonionic surfactant.

Suitable alkoxylated alkyl alcohol nonionic surfactant include C12-C18 alkyl ethoxylates ("AE") including the so-called narrow peaked alkyl ethoxylates and C6-C12 alkyl phenol alkoxylates (especially ethoxylates and mixed ethoxy/propoxy), block alkylene oxide condensate of C6-C12 alkyl phenols, alkylene oxide condensates of C8-C22 alkanols and ethylene oxide/propylene oxide block polymers (Pluronic - BASF Corp.), as well as semi polar nonionics (e.g., amine oxides and phosphine oxides) can be used in the present compositions. An extensive disclosure of these types of surfactants is found in U.S. Pat. 3,929,678, Laughlin et al., issued December 30, 1975.

For improved whiteness, the alkyl polyglucoside surfactant can have a number average alkyl carbon chain length from 8 to 16, preferably from 10 to 14, most preferably from 12 to 14, with an average degree of polymerization of from 0.1 to 3.0, preferably from 1.0 to 2.0, most preferably from 1.2 to 1.6.

C8-C18 alkyl polyglucosides are commercially available from several suppliers (e.g., Simusol^{®} surfactants from Seppic Corporation; and Glucopon^{®} 600 CSUP, Glucopon^{®} 650 EC, Glucopon^{®} 600 CSUP/MB, and Glucopon^{®} 650 EC/MB, from BASF Corporation).

Alkylpolysaccharides such as disclosed in U.S. Pat. 4,565,647 Llenado are also useful nonionic surfactants in the compositions of the invention.

### Vinylpyrrolidone polymer

The detergent composition comprises at least one vinylpyrrolidone polymer. The vinylpyrrolidone polymer is selected from the group consisting of: polyvinylpyrrolidone (PVP), copolymers of vinylpyrrolidone and vinylimidazole (PVP/PVI), and mixtures thereof.

Polyvinylpyrrolidone ("PVP") has an amphiphilic character with a highly polar amide group conferring hydrophilic and polar attracting properties, and also has apolar methylene and methane groups, in the backbone and/or the ring, conferring hydrophobic properties. The rings may also provide planar alignment with the aromatic rings, in the dye molecules. PVP is readily soluble in aqueous and organic solvent systems. PVP is commercially available in either powder or aqueous solutions in several viscosity grades. The compositions of the present invention preferably utilize a copolymer of N- vinylpyrrolidone and N- vinylimidazole (also abbreviated herein as "PVPVI"). It has been found that copolymers of N-vinylpyrrolidone and N-vinylimidazole also provide excellent dye transfer inhibiting performance. The copolymers of N-vinylpyrrolidone and N-vinylimidazole can have a molar ratio of N-vinylimidazole to N-vinylpyrrolidone from 1:1 to 0.2:1 , more preferably from 0.8:1 to 0.3:1 , most preferably from 0.6:1 to 0.4:1. The copolymer of N-vinylpyrrolidone and N-vinylimidazole can be either linear or branched. Particularly suitable polyvinylpyrrolidones (PVP), and copolymers of vinylpyrrolidone and vinylimidazole (PVP/PVI), can have a weight average molecular weight of from 5,000 Da to 1,000, 000 Da, preferably from 5,000 Da to 50,000 Da, more preferably from 10,000 Da to 20,000 Da. The number average molecular weight range is determined by light scattering as described in Barth J. H. G. and Mays J. W. Chemical Analysis Vol 1 13. "Modern Methods of Polymer Characterization." Copolymers of poly (N-vinyl-2-pyrollidone) and poly (N-vinyl-imidazole) are commercially available from a number of sources including BASF. A preferred DTI is commercially available under the tradename Sokalan^{®} HP 56 K from BASF (BASF SE, Germany).

Copolymers of poly (N-vinyl-2-pyrrolidone) and poly (N-vinyl-imidazole) are commercially available from a number of sources including BASF. A preferred DTI is commercially available under the tradename Sokalan^{®} HP 56 K from BASF (BASF SE, Germany).

Mixtures of more than one dye transfer inhibition polymers may be used.

The vinylpyrrolidone polymer can be present at a level of from 0.05% to 5%, or from 0.1% to 3%, and or from 0.2% to 1.0%, by weight of the detergent composition.

### Enzyme exhibiting endo beta-1,4-glucanase activity

The liquid detergent composition comprises at least one enzyme exhibiting endo-beta-1,4-glucanase activity. The liquid laundry detergent composition may comprise from 0.0001% to 0.1%, preferably from 0.0003% to 0.08%, more preferably from 0.0004% to 0.05%, and most preferably from 0.0005% to 0.02% by weight of the composition, of the endo-beta-1,4-glucanase enzyme.

Enzymes exhibiting endo-beta-1,4-glucanase activity may be categorized as Enzyme Commission number E.C. 3.2.1.4, although members of other E.C. classes exhibit this activity including xyloglucan-specific endo-beta-1,4-glucanase (E.C. 3.2.1.151). For the avoidance of doubt, the test method used to determine whether an enzyme exhibits endo-beta-1,4-glucanase activity is described herein.

The enzyme exhibiting endo-beta-1,4-glucanase activity may be wild-types or variants of enzymes encoded by the DNA of any kingdom of life. More preferably, the enzyme exhibiting endo-beta-1,4-glucanase is a wild-type or variant of an enzyme encoded by the DNA of a microbial organism such as a fungi or bacteria. The enzyme may be encoded by the DNA sourced from environmental metagenomes, and as such, the parent organism may be unknown.

The enzyme exhibiting endo-beta-1,4-glucanase activity may belong to any glycoside hydrolase family, as defined by the carbohydrate-active enzyme database (E. Drula et al., Nucleic Acids Research, Volume 50, Issue D1, 7 January 2022, Pages D571-D577). Most enzymes exhibiting endo-beta-1,4-glucanase belong to one of families 5, 6, 7, 8, 9, 10, 12, 26, 44, 45, 48, 51, 74, 124 and 148.

The enzyme exhibiting endo-beta-1,4-glucanase activity may be a chimeric protein formed by combining protein encoded by more than one DNA source, or a variant thereof. For example, the enzyme may involve a catalytic domain created by combining regions from the catalytic domains of more than one parent enzyme, and/or by combining the catalytic domain from one enzyme with the carbohydrate binding modules of other enzyme(s).

The enzyme exhibiting endo-beta-1,4-glucanase activity may optionally comprise one or more carbohydrate binding modules. These modules influence enzyme interactions with their endo-beta-1,4-glucan substrate, typically by targeting the enzyme to distinct regions on the polysaccharide or by bringing the enzyme into proximity with the polysaccharide. Some carbohydrate binding modules are known to help disrupt the surface of target polysaccharides. Carbohydrate binding modules belong to three types, and within these types, they are further classified into families. Type A carbohydrate binding modules, such as those from families CBM1, 2, 3, 5 and 10 bind planar crystalline structures such as crystalline cellulose. Type B carbohydrate binding modules such as those from families CBM6, 13, 17, 20, 28, 36 and 60 bind internal glycan chains, typically comprising four or more monosaccharide units. Type C carbohydrate binding modules bind termini of glycans, and as such are not commonly found associated with endo-beta-1,4-glucanase enzymes that act in the interior of beta-1,4-glucan chains.

The enzyme exhibiting endo-beta-1,4-glucanase activity can be a polypeptide having at least 60% sequence identity to the polypeptide of SEQ ID NO: 1, SEQ ID NO: 2, SEQ ID NO: 3, SEQ ID NO: 4, SEQ ID NO: 5 or SEQ ID NO: 6. Preferably the enzyme having endo-beta-1,4-glucanase activity is a polypeptide having at least 65%, at least 70%, at least 75%, at least 80%, at least 85%, at least 90%, at least 91%, at least 92%, at least 93%, at least 94%, at least 95%, at least 96%, at least 97%, at least 98%, at least 99%, or 100% sequence identity to the polypeptide of SEQ ID NO: 1, SEQ ID NO: 2, SEQ ID NO: 3, SEQ ID NO: 4, SEQ ID NO: 5 or SEQ ID NO: 6, or a fragment thereof having endo-beta-1,4-glucanase activity.

The enzyme exhibiting endo-beta-1,4-glucanase activity can be a polypeptide having at least 80%, at least 85%, at least 90%, at least 95%, at least 98%, at least 99%or 100%sequence identity to the mature polypeptide of SEQ ID NO: 1, or a fragment thereof having endo-beta-1,4-glucanase activity. In one embodiment, the mature polypeptide is amino acids 1 to 773 of SEQ ID NO: 1. In a specific embodiment, said enzyme is from Alkalihalobacillus, preferably from Alkalihalobacillus akibai.

The enzyme exhibiting endo-beta-1,4-glucanase activity can be a polypeptide having at least 80%, at least 85%, at least 90%, at least 95%, at least 98%, at least 99%or 100%sequence identity to the mature polypeptide of SEQ ID NO: 2, or a fragment thereof having endo-beta-1,4-glucanase activity. In one embodiment, the mature polypeptide is amino acids 22 to 294 of SEQ ID NO: 2. In a specific embodiment, said enzyme is from Sordania, preferably from Sordania fimicola.

The enzyme exhibiting endo-beta-1,4-glucanase activity can be a polypeptide having at least 80%, at least 85%, at least 90%, at least 95%, at least 98%, at least 99% or 100% sequence identity to the mature polypeptide of SEQ ID NO: 3, or a fragment thereof having endo-beta-1,4-glucanase activity. In another embodiment, the mature polypeptide is amino acids 22 to 305 of SEQ ID NO: 3. In a specific embodiment, said enzyme is from Humicola, preferably from Humicola insolens.

The enzyme exhibiting endo-beta-1,4-glucanase activity can be a polypeptide having at least 80%, at least 85%, at least 90%, at least 95%, at least 98%, at least 99% or 100% sequence identity to the mature polypeptide of SEQ ID NO: 4, or a fragment thereof having endo-beta-1,4-glucanase activity. In one embodiment, the mature polypeptide is amino acids 22 to 299 of SEQ ID NO: 4. In a specific embodiment, said enzyme is from Thielavia, preferably from Thielavia terrestris.

The enzyme exhibiting endo-beta-1,4-glucanase activity can be a polypeptide having at least 80%, at least 85%, at least 90%, at least 95%, at least 98%, at least 99% or 100% sequence identity to the mature polypeptide of SEQ ID NO: 5, or a fragment thereof having endo-beta-1,4-glucanase activity. In one embodiment, the mature polypeptide is amino acids 1 to 295 of SEQ ID NO: 5. In a specific embodiment, said enzyme is from Staphylotrichum, preferably from Staphylotrichum cocosporum.

The enzyme exhibiting endo-beta-1,4-glucanase activity can be a polypeptide having at least 80%, at least 85%, at least 90%, at least 95%, at least 98%, at least 99% or 100% sequence identity to the mature polypeptide of SEQ ID NO: 6, or a fragment thereof having endo-beta-1,4-glucanase activity. In one embodiment, the mature polypeptide is amino acids 1 to 214 of SEQ ID NO: 6. In a specific embodiment, said enzyme is from Melanocapus, preferably from Melanocapus albomyces.

The enzyme exhibiting endo-beta-1,4-glucanase activity can be a family 44 glycoside hydrolase having a sequence of at least 80%, at least 85%, at least 90%, at least 95%, at least 98%, at least 99% or 100% sequence identity to SEQ ID NO: 7, or a fragment thereof having endo-beta-1,4-glucanase activity. In a specific embodiment, said enzyme is from Paenibacillus, preferably from Paenibacillus polymyxa. In another embodiment, the enzyme exhibiting endo-beta-1,4-glucanase activity is a variant of SEQ ID NO: 7 disclosed in WO2022043321, for example a variant of SEQ ID NO: 7 with one of more of the following substitutions wherein an asterisk denotes a deletion: P111Q, S123P, V159M, S256E, S256Q, I294E, I294Q, K8E, K8R, K18E, R20K, A41L, A41E, A41R, A42V, S76E, Q82E, A83E, K87E, S94R, G103V, T104G, T104R, Y105E, A118K, N121 E, Q125F, Q125K, Q125L, Q125P, Q125S, E126P, S127H, S127L, S127W, S127D, N136D, Q137E, Q137K, F146D, Q147G, Q147K, L148P, L152*, L152D, L152E, L152P, N153E, N155D, N155E, F165H, N168R, K169E, K169R, A177G, L184M, A189G, V203T, K206E, K206R, D210H, D210R, R211K, S214Q, K217R, K217T, V219A, V219T, K220R, A226D, A226K, G237M, A238S, A238T, K240F, K240L, Q243E, T244E, T244R, W248V, V251E, K252E, R267C, R267H, R267K, Q271D, Q271E, R276K, A289T, R295K, N298D, V300L, N302H, K322E, Q329E, P339S, K347E, K347R, K353R, N383E, N383Q, D384G, K392E, K394R, D395P, S402Q, K414E, T427V, V431E, K445E, L447M, A459P, I473T, S474E, K476R, K482R, K488T, E489K, E489R, A491 E, A491V, P492D, Y503L, Y503V and V505L.

The enzyme exhibiting endo-beta-1,4-glucanase activity can be a family 7 glycoside hydrolase having a sequence of at least 80%, at least 85%, at least 90%, at least 95%, at least 98%, at least 99% or 100% sequence identity to the mature polypeptide of SEQ ID NO: 8, or a fragment thereof having endo-beta-1,4-glucanase activity. In a specific embodiment, said enzyme is from Humicola, preferably from Humicola insolens.

Other suitable enzymes exhibiting endo-beta-1,4-glucanase activity are those with at least 80% sequence identity, such as 85%, 90%, 91%, 92%, 93%, 94%, 95%, 96%, 97%, 98%, 99% or even 100% sequence identity to any of SEQ ID NO:397, SEQ ID NO:398, SEQ ID NO:399, SEQ ID NQ:400, and SEQ ID NQ:401 of WO2023061928.

The degree of identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends in Genetics 16: 276-277), preferably version 3.0.0 or later. The optional parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows: (Identical Residues x 100)/(Length of Alignment - Total Number of Gaps in Alignment).

Further suitable enzymes exhibiting endo-beta-1,4-glucanase activity include those of bacterial or fungal origin. Chemically modified or protein engineered mutants may be included. Suitable enzymes exhibiting endo-beta-1,4-glucanase activity include those from the genera Bacillus, Pseudomonas, Humicola, Fusarium, Thielavia, Acremonium, e.g., the fungal endo-beta-1,4-glucanases produced from Humicola insolens, Myceliophthora thermophila and Fusarium oxysporum disclosed in US 4,435,307, US 5,648,263, US 5,691,178, US 5,776,757, and WO 89/09259.

Additional suitable endo-beta-1,4-glucanases are the alkaline or neutral endo-beta-1,4-glucanases having colour care benefits. Examples of such endo-beta-1,4-glucanases are those described in EP 0495257, EP 0531372, WO 96/11262, WO 96/29397, WO 98/08940. Other examples are endo-beta-1,4-glucanase variants such as those described in WO 94/07998, EP 0531315, US 5,457,046, US 5,686,593, US 5,763,254, WO 95/24471, WO 98/12307 and WO99/001544.

Suitable enzymes exhibiting endo-beta-1,4-glucanase activity are commercially available such as the those sold under the brand names Celluclean^{®}, Celluclean^{®} Classic, Celluzyme^{®}, Carezyme^{®}, Carezyme^{®} Premium, Carezyme^{®} Elite, Endolase^{®}, Whitezyme^{®}, Luminous^{®} (Novozymes A/S, Bagsvaerd, Denmark), Revitalenz^{®}, e.g. Revitalenz^{®} 200 (International Flavors and Fragrances, Palo Alto, USA), Biotouch^{®}, e.g. Biotouch^{®} FLX, Biotouch^{®} Duo 505, Biotouch^{®} FCL275 (AB Enzymes, Darmstadt, Germany), and Lavergy^{®}, e.g. Lavergy^{®} C Bright 100 L (BASF, Ludwigshafen, Germany).

### Other enzymes

The composition can comprise other enzymes. Suitable other enzymes can be added to provide further cleaning performance and/or fabric care benefits. Examples of suitable enzymes include, but are not limited to, peroxidases, proteases, xylanases, lipases, phospholipases, esterases, cutinases, pectinases, keratanases, reductases, oxidases, phenoloxidases, lipoxygenases, ligninases, pullulanases, tannases, pentosanases, malanases, β-glucanases, arabinosidases, hyaluronidase, chondroitinase, laccase, and known amylases, or combinations thereof. A preferred enzyme combination comprises a cocktail of conventional detersive enzymes such as protease, lipase, cutinase with cellulase in conjunction with amylase. Detersive enzymes are described in greater detail in U.S. Patent No. 6,579,839.

### Optional Ingredients

The detergent composition may additionally comprise one or more of the following optional ingredients: dye fixative polymer, external structurant or thickener, enzymes, enzyme stabilizers, cleaning polymers, optical brighteners, hueing dyes, particulate material, perfume and other odour control agents, hydrotropes, suds suppressors, fabric care benefit agents, pH adjusting agents, dye transfer inhibiting agents, preservatives, non-fabric substantive dyes and mixtures thereof.

The laundry detergent composition does not comprise a bleach.

External structurant or thickener: Preferred external structurants and thickeners are those that do not rely on charge - charge interactions for providing a structuring benefit. As such, particularly preferred external structurants are uncharged external structurants, such as those selected from the group consisting of: non-polymeric crystalline, hydroxyl functional structurants, such as hydrogenated castor oil; microfibrillated cellulose; uncharged hydroxyethyl cellulose; uncharged hydrophobically modified hydroxyethyl cellulose; hydrophobically modified ethoxylated urethanes; hydrophobically modified non-ionic polyols; and mixtures thereof.

Suitable polymeric structurants include naturally derived and/or synthetic polymeric structurants.

Examples of naturally derived polymeric structurants of use in the present invention include: microfibrillated cellulose, hydroxyethyl cellulose, hydrophobically modified hydroxyethyl cellulose, carboxymethyl cellulose, polysaccharide derivatives and mixtures thereof. Non-limiting examples of microfibrillated cellulose are described in WO 2009/101545 A1. Suitable polysaccharide derivatives include: pectine, alginate, arabinogalactan (gum Arabic), carrageenan, gellan gum, xanthan gum, guar gum and mixtures thereof.

Examples of synthetic polymeric structurants or thickeners of use in the present invention include: polycarboxylates, hydrophobically modified ethoxylated urethanes (HEUr), hydrophobically modified non-ionic polyols and mixtures thereof.

Preferably, the aqueous liquid detergent composition has a viscosity of 50 to 5,000, preferably 75 to 1,000, more preferably 100 to 500 mPa.s, when measured at a shear rate of 100 s-1, at a temperature of 20°C. For improved phase stability, and also improved stability of suspended ingredients, the aqueous liquid detergent composition has a viscosity of 50 to 250,000, preferably 5,000 to 125,000, more preferably 10,000 to 35,000 mPa.s, when measured at a shear rate of 0.05 s-1, at a temperature of 20°C.

Cleaning polymers: The detergent composition preferably comprises a cleaning polymer. Such cleaning polymers are believed to at least partially lift the stain from the textile fibres and enable the enzyme system to more effectively break up the complexes comprising mannan and other polysaccharide. Suitable cleaning polymers provide for broad-range soil cleaning of surfaces and fabrics and/or suspension of the soils. Non-limiting examples of suitable cleaning polymers include: amphiphilic alkoxylated grease cleaning polymers; clay soil cleaning polymers; soil release polymers; and soil suspending polymers. A preferred cleaning polymer is obtainable by free-radical copolymerization of at least one compound of formula (I), 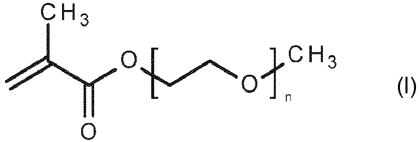
in which n is equal to or greater than 3 for a number,
   with at least one compound of formula (II), 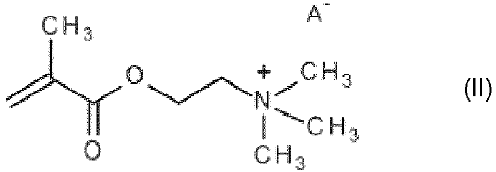
in which A⁻ represents an anion, in particular selected from halides such as fluoride, chloride, bromide, iodide, sulphate, hydrogen sulphate, alkyl sulphate such as methyl sulphate, and mixtures thereof. Such polymers are further described in EP3196283A1.

For similar reasons, polyester based soil release polymers, such as SRA300, supplied by Clariant are also particularly preferred.

Other useful cleaning polymers are described in US20090124528A1. The detergent composition may comprise amphiphilic alkoxylated grease cleaning polymers, which may have balanced hydrophilic and hydrophobic properties such that they remove grease particles from fabrics and surfaces. The amphiphilic alkoxylated grease cleaning polymers may comprise a core structure and a plurality of alkoxylate groups attached to that core structure. These may comprise alkoxylated polyalkyleneimines, for example. Such compounds may comprise, but are not limited to, ethoxylated polyethyleneimine, ethoxylated hexamethylene diamine, and sulphated versions thereof. Polypropoxylated derivatives may also be included. A wide variety of amines and polyalklyeneimines can be alkoxylated to various degrees. A useful example is 600g/mol polyethyleneimine core ethoxylated to 20 EO groups per NH and is available from BASF. The alkoxylated polyalkyleneimines may have an inner polyethylene oxide block and an outer polypropylene oxide block. The detergent compositions may comprise from 0.1% to 10%, preferably, from 0.1% to 8.0%, more preferably from 0.1% to 2.0%, by weight of the detergent composition, of the cleaning polymer.

Polymer Deposition Aid: The laundry detergent composition can comprise from 0.1% to 7.0%, more preferably from 0.2% to 3.0%, of a polymer deposition aid. As used herein, "polymer deposition aid" refers to any cationic polymer or combination of cationic polymers that significantly enhance deposition of a fabric care benefit agent onto the fabric during laundering. Suitable polymer deposition aids include a cationic polysaccharide and/or a copolymer, with cationic polysaccharide being preferred. The cationic polymer can also be selected from the group consisting of: poly (diallyldimethylammonium chloride / co-acrylic acid), poly(acrylamide-methacrylamidopropyltrimethyl ammonium chloride), poly(acrylamide-methacrylamidopropyltrimethyl ammonium chloride / co-acrylic acid), poly(acrylamide-co-diallyldimethylammonium chloride / co-acrylic acid), poly(acrylamide-co-N,N, N-trimethyl aminoethyl acrylate), poly(diallyldimethylammonium chloride / co-vinyl alcohol), poly (diallyldimethylammonium chloride / acrylamide), and mixtures thereof. The diallyldimethylammonium chloride and co-acrylic acid monomers can be present in a mol ratio of from 50:50 to 90:10, preferably from 55:45 to 85:15, more preferably from 60:40 to 70:30. For poly(diallyldimethylammonium chloride / co-acrylic acid) the preferred ratio of diallyldimethylammonium chloride to acrylic acid is between approximately 90:10 and 50:50. The preferred cationic polymer is poly (diallyldimethylammonium chloride / co-acrylic acid) copolymer at a 65/35 mole ratio with a molecular weight of approximately 450,000. Poly (diallyldimethylammonium chloride / co-acrylic acid) copolymer may be further described by the nomenclature Polyquaternium-22 or PQ22 as named under the International Nomenclature for Cosmetic Ingredients. Poly (diallyldimethylammonium chloride / acrylamide) may be further described by the nomenclature Polyquaternium-7 or PQ7 as named under the International Nomenclature for Cosmetic Ingredients.

"Fabric care benefit agent" as used herein refers to any material that can provide fabric care benefits. Non-limiting examples of fabric care benefit agents include: silicone derivatives, oily sugar derivatives, dispersible polyolefins, polymer latexes, cationic surfactants and combinations thereof. Preferably, the deposition aid is a cationic or amphoteric polymer. The cationic charge density of the polymer preferably ranges from 0.05 milliequivalents/g to 6.0 milliequivalents/g. The charge density is calculated by dividing the number of net charge per repeating unit by the molecular weight of the repeating unit. In one embodiment, the charge density varies from 0.1 milliequivalents/g to 3.0 milliequivalents/g. The positive charges could be on the backbone of the polymers or the side chains of polymers.

Organic builder and/or chelant: The laundry detergent composition can comprise from 0.6% to 10%, preferably from 2.0 to 7.0% by weight of one or more organic builder and/or chelants. Suitable organic builders and/or chelants are selected from the group consisting of: MEA citrate, citric acid, aminoalkylenepoly(alkylene phosphonates), alkali metal ethane 1-hydroxy disphosphonates, and nitrilotrimethylene, phosphonates, diethylene triamine penta (methylene phosphonic acid) (DTPMP), ethylene diamine tetra(methylene phosphonic acid) (EDTMP), hexamethylene diamine tetra(methylene phosphonic acid), hydroxy- ethylene 1,1 diphosphonic acid (HEDP), hydroxyethane dimethylene phosphonic acid, ethylene di-amine di-succinic acid (EDDS), ethylene diamine tetraacetic acid (EDTA), hydroxyethylethylenediamine triacetate (HEDTA), nitrilotriacetate (NTA), methylglycinediacetate (MGDA), iminodisuccinate (IDS), hydroxyethyliminodisuccinate (HIDS), hydroxyethyliminodiacetate (HEIDA), glycine diacetate (GLDA), diethylene triamine pentaacetic acid (DTPA), catechol sulphonates such as Tiron^{™} and mixtures thereof.

Enzyme stabiliser: Enzymes can be stabilized using any known stabilizer system such as calcium and/or magnesium compounds, boron compounds and substituted boric acids, aromatic borate esters, peptides and peptide derivatives, polyols, low molecular weight carboxylates, relatively hydrophobic organic compounds [e.g. certain esters, diakyl glycol ethers, alcohols or alcohol alkoxylates], alkyl ether carboxylate in addition to a calcium ion source, benzamidine hypochlorite, lower aliphatic alcohols and carboxylic acids, N,N-bis(carboxymethyl) serine salts; (meth)acrylic acid-(meth)acrylic acid ester copolymer and PEG; lignin compound, polyamide oligomer, glycolic acid or its salts; poly hexa methylene bi guanide or N,N-bis-3-amino-propyl-dodecyl amine or salt; and mixtures thereof.

Hueing dyes: The detergent composition may comprise fabric hueing agent (sometimes referred to as shading, bluing, or whitening agents). Typically, the hueing agent provides a blue or violet shade to fabric. Hueing agents can be used either alone or in combination to create a specific shade of hueing and/or to shade different fabric types. This may be provided for example by mixing a red and green-blue dye to yield a blue or violet shade. Hueing agents may be selected from any known chemical class of dye, including but not limited to acridine, anthraquinone (including polycyclic quinones), azine, azo (e.g., monoazo, disazo, trisazo, tetrakisazo, polyazo), including premetallized azo, benzodifurane and benzodifuranone, carotenoid, coumarin, cyanine, diazahemicyanine, diphenylmethane, formazan, hemicyanine, indigoids, methane, naphthalimides, naphthoquinone, nitro and nitroso, oxazine, phthalocyanine, pyrazoles, stilbene, styryl, triarylmethane, triphenylmethane, xanthenes and combinations thereof.

Optical brighteners: The detergent composition may comprise, based on the total detergent composition weight, from 0.005% to 2.0%, preferably 0.01% to 0.1% of a fluorescent agent (optical brightener). Fluorescent agents are well known and many fluorescent agents are available commercially. Usually, these fluorescent agents are supplied and used in the form of their alkali metal salts, for example, the sodium salts. Preferred classes of fluorescent agent are: Di-styryl biphenyl compounds, e.g. Tinopal^{®} CBS-X, Di-amine stilbene di-sulphonic acid compounds, e.g. Tinopal^{®} DMS pure Xtra and Blankophor^{®} HRH, and Pyrazoline compounds, e.g. Blankophor^{®} SN. Preferred fluorescers are: sodium 2-(4-styryl-3-sulphophenyl)-2H-napthol[1 ,2-d]trazole, disodium 4,4'-bis{[(4-anilino-6-(N methyl-N-2 hydroxyethyl) amino 1 ,3,5-triazin-2-yl)]amino}stilbene-2-2' disulphonate, disodium 4,4'-bis{[(4-anilino-6-morpholino-1 ,3,5-triazin-2-yl)]annino} stilbene-2-2' disulphonate, and disodium 4,4'-bis(2-sulphoslyryl)biphenyl.

Hydrotrope: The detergent composition may comprise, based on the total detergent composition weight, from 0 to 30%, preferably from 0.5 to 5%, more preferably from 1.0 to 3.0%, which can prevent liquid crystal formation. The addition of the hydrotrope thus aids the clarity/transparency of the composition. Suitable hydrotropes comprise but are not limited to urea, salts of benzene sulphonate, toluene sulphonate, xylene sulphonate or cumene sulphonate. Preferably, the hydrotrope is selected from the group consisting of propylene glycol, xylene sulphonate, ethanol, and urea to provide optimum performance.

Particles: The composition can also comprise particles, especially when the composition further comprises a structurant or thickener. The composition may comprise, based on the total composition weight, from 0.02% to 10%, preferably from 0.1% to 4.0%, more preferably from 0.25% to 2.5% of particles. Said particles include beads, pearlescent agents, capsules, and mixtures thereof.

Suitable capsules are typically formed by at least partially, preferably fully, surrounding a benefit agent with a wall material. Preferably, the capsule is a perfume capsule, wherein said benefit agent comprises one or more perfume raw materials. The capsule wall material may comprise: melamine, polyacrylamide, silicones, silica, polystyrene, polyurea, polyurethanes, polyacrylate based materials, polyacrylate esters based materials, gelatin, styrene malic anhydride, polyamides, aromatic alcohols, polyvinyl alcohol, resorcinol-based materials, poly-isocyanate-based materials, acetals (such as 1,3,5-triol-benzene-gluteraldehyde and 1,3,5-triol-benzene melamine), starch, cellulose acetate phthalate and mixtures thereof. Preferably, the capsule wall comprises melamine and/or a polyacrylate based material. The perfume capsule may be coated with a deposition aid, a cationic polymer, a non-ionic polymer, an anionic polymer, or mixtures thereof. Preferably, the perfume capsules have a volume weighted mean particle size from 0.1 microns to 100 microns, preferably from 0.5 microns to 60 microns. Especially where the composition comprises capsules having a shell formed at least partially from formaldehyde, the composition can additionally comprise one or more formaldehyde scavengers.

### Process of making the laundry detergent composition:

The laundry detergent compositions can be made using any suitable process known to the skilled person. Typically, the ingredients are blended together in any suitable order. Preferably, the detersive surfactants are added as part of a concentrated premix, to which are added the other optional ingredients. Preferably, the solvent is added either last, or if an external structurant is added, immediately before the external structurant, with the external structurant being added as the last ingredient.

### Method of laundering fabrics:

The laundry detergent compositions of the present invention are used to launder fabrics. In such methods and uses, the laundry detergent composition can be diluted to provide a wash liquor having a total surfactant concentration of greater than 300 ppm, preferably from 400 ppm to 2,500 ppm, more preferably from 600 ppm to 1000 ppm. The fabric is then washed in the wash liquor, and preferably rinsed.

### METHODS

### A) pH measurement:

The pH is measured, at 25°C, using a Santarius PT-10P pH meter with gel-filled probe (such as the Toledo probe, part number 52 000 100), calibrated according to the instruction manual. The pH is measured in a 10% dilution in demineralised water (i.e. 1 part laundry detergent composition and 9 parts demineralised water).

### B) Measuring viscosity:

The viscosity is measured using an AR 2000 rheometer from TA instruments using a cone and plate geometry with a 40 mm diameter and an angle of 1°. The viscosity at the different shear rates is measured via a logarithmic shear rate sweep from 0.1 s⁻¹ to 1200 s⁻¹ in 3 minutes time at 20°C. Low shear viscosity is measured at a continuous shear rate of 0.05 s⁻¹.

### C) Endo-beta-1,4-glucanase activity:

An enzyme is deemed to have endo-beta-1,4-glucanase activity if the pure enzyme has a specific activity of greater than 20000 EBG/g according to the following assay at pH 7.5. Chemicals used as buffers and substrates were commercial products of at least reagent grade.

### Endoglucanase Activity Assay Materials:

0.1M phosphate buffer pH 7.5
Cellazyme C tablets, supplied by Megazyme, Bray, Ireland.
Glass microfiber filters, GF/C, 9cm diameter, supplied by Whatman, Little Chalfont, UK. Method:
   In test tubes, mix l ml pH 7.5 buffer and 5ml deionised water. Add 100µl of the enzyme sample (or of dilutions of the enzyme sample with known weight:weight dilution factor). Add 1 Cellazyme C tablet into each tube, cap the tubes and mix on a vortex mixer for 10 seconds. Place the tubes in a thermally controlled water bath, temperature 40°C.

After 15, 30 and 45 minutes, mix the contents of the tubes by inverting the tubes, and replace in the water bath. After 60 minutes, mix the contents of the tubes by inversion and then filter through a GF/C filter. Collect the filtrate in a clean tube.
Measure Absorbance (Aenz) at 590nm, using a spectrophotometer. A blank value, Awater, is determined by adding 100µl water instead of 100µl enzyme dilution.
Calculate Adelta = Aenz - Awater. Adelta must be <0.5. If higher results are obtained, repeat with a different enzyme dilution factor.
Determine DF_{0.1}, where DF_{0.1} is the dilution factor needed to give Adelta = 0.1.
Unit Definition: 1 Endo-Beta-Glucanase activity unit (1 EBG) is the amount of enzyme that gives Adelta = 0.10, under the assay conditions specified above. Thus, for example, if a given enzyme sample, after dilution by a dilution factor of 100, gives Adelta= 0.10, then the enzyme sample has an activity of 100 EBG/g.

### D) Measuring Cellulase activity:

The cellulase concentration in the detergent composition was measured with a Microplate readers-MD MDSpectraMax i3.

A citrate buffer was prepared by adding 800ml to 900 ml of deionized water to 21.000 (+/-0.100) g of citric acid under stirring, adjusting the pH to 5.0 using 50% sodium hydroxide solution and adding further deionized water to make a volume of 1.0 L.

1.0000g +/- 0.0300 g of the liquid laundry detergent composition was added into a 100 ml class A volumetric flask, and was diluted to volume (100 ml), using the citrate buffer and mixed for 15 minutes. 400 µL of the diluted composition was added to a 2 mL micro-centrifuge tube, and 1400 µL of AZCL-cellulose substrate was subsequently added while continuously stirring. The vial was placed in a heated shaker at 50 °C for 20 minutes, and subsequently centrifuged for 5 minutes at 13,300 RPM. The absorbance of the supernatant was measured at 590nm without disturbing the insoluble AZCL-cellulose substrate. The recorded sample absorbencies values were cross-referenced to standard absorbencies to determine the cellulase concentrations.

### EXAMPLES

The following liquid laundry detergent compositions were prepared. Cellulase enzyme was used as the model enzyme exhibiting endo beta-1,4-glucanase activity. The endo beta-1,4-glucanase (cellulase) activity was measured after storage at 30 °C. The compositions of table 1 comprised the sulfonate anionic surfactant at a level of 60% by weight of the surfactant system. The compositions of table 2 comprised the sulfonate anionic surfactant at a level of 45.5% by weight of the surfactant system. The compositions of table 3 comprised the sulfonate anionic surfactant at a level of 30% by weight of the surfactant system, and hence were all comparative. All of the compositions comprised fatty acid at a level of 1.5% by weight of the composition.

**Table 1: Inventive and comparative compositions comprising the sulfonate anionic surfactant at a level of 60% by weight of the surfactant system, and fatty acid at a level of 1.5% by weight of the composition.**

| | Ex 1 | Ex 2 | Ex A |
|---|---|---|---|
| | wt% | wt% | wt% |
| C10-C13 linear alkyl benzene sulphonate | 9.83 | 9.83 | 9.83 |
| C12-C14 AE3.0S | 2.59 | 2.59 | 2.59 |
| C14-C14 EO7 | 2.58 | 2.58 | 2.58 |
| TPK Fatty Acid | 1.5 | 1.5 | 1.5 |
| NaOH | 0.74 | 0.17 | 2.34 |
| PVP/PVI copolymer¹ | 0.4 | 0.1 | - |
| Endo beta-1,4-glucanase enzyme² | 0.02 | 0.02 | 0.02 |
| Water | to 100% | to 100% | to 100% |
| pH | 7.5 | 7.5 | 7.5 |
| | | | |

| Measured endo beta-1,4-glucanase (cellulase) activity (mg/100g) after storage at 30 °C | | | |
|---|---|---|---|
| Fresh (within 1 day) | 1.63 | 1.51 | 1.35 |
| After 1 week | 1.28 | 1.09 | 1.09 |
| After 4 weeks | 0.70 | 0.59 | 0.52 |
| | | | |

| | | | |
|---|---|---|---|
| ¹ Supplied by BASF under the tradename SOKALAN^{®} HP56K ² Carezyme^{®} Elite 100L, cellulase enzyme supplied by Novozymes | | | |

**Table 2: Inventive and comparative compositions comprising the sulfonate anionic surfactant at a level of 45.5% by weight of the surfactant system, and fatty acid at a level of 1.5% by weight of the composition.**

| | Ex 3 | Ex 4 | Ex B |
|---|---|---|---|
| | wt% | wt% | wt% |
| C10-C13 linear alkyl benzene sulphonate | 7.5 | 7.5 | 7.5 |
| C 12-C 14 AE3 . 0 S | 3.75 | 3.75 | 3.75 |
| C14-C14 EO7 | 3.75 | 3.75 | 3.75 |
| TPK Fatty Acid | 1.5 | 1.5 | 1.5 |
| NaOH | 0.736 | 0.172 | 2.345 |
| PVP/PVI copolymer¹ | 0.4 | 0.1 | - |
| Endo beta-1,4-glucanase enzyme² | 0.02 | 0.02 | 0.02 |
| Water | to 100% | to 100% | to 100% |
| pH | 7.5 | 7.5 | 7.5 |
| | | | |

| Measured endo beta-1,4-glucanase (cellulase) activity (mg/100g) after storage at 30 °C | | | |
|---|---|---|---|
| Fresh (within 1 day) | 1.55 | 1.41 | 1.11 |
| After 1 week | 1.05 | 0.88 | 0.75 |
| After 4 weeks | 0.42 | 0.33 | 0.23 |
| | | | |

**Table 3: Comparative compositions comprising the sulfonate anionic surfactant at a level of 30% by weight of the surfactant system, and fatty acid at a level of 1.5% by weight of the composition.**

| | Ex C | Ex D | ExE |
|---|---|---|---|
| | wt% | wt% | wt% |
| C10-C13 linear alkyl benzene sulphonate | 5.0 | 5.0 | 5.0 |
| C12-C14 AE3.0S | 5.0 | 5.0 | 5.0 |
| C14-C14 EO7 | 5.0 | 5.0 | 5.0 |
| TPK Fatty Acid | 1.5 | 1.5 | 1.5 |
| NaOH | 0.736 | 0.172 | 2.345 |
| PVP/PVI copolymer¹ | 0.4 | 0.1 | - |
| Endo beta-1,4-glucanase enzyme² | 0.02 | 0.02 | 0.02 |
| Water | to 100% | to 100% | to 100% |
| pH | 7.5 | 7.5 | 7.5 |
| | | | |

| Measured endo beta-1,4-glucanase (cellulase) activity (mg/100g) after storage at 30 °C | | | |
|---|---|---|---|
| Fresh (within 1 day) | 1.66 | 1.40 | 1.05 |
| After 1 week | 1.02 | 0.66 | 0.42 |
| After 4 weeks | 0.27 | 0.16 | 0.09 |
| | | | |

By comparing the results of examples A, B, and C, it can be seen that increasing the weight fraction of sulphonate anionic surfactant in the anionic surfactant results in an improvement in the stability of the endo beta-1,4-glucanase (cellulase) enzyme. However, the endo beta-1,4-glucanase stability remained poor. From comparing the endo beta-1,4-glucanase (cellulase) enzyme stability of examples 1, 2, and A, and 3, 4, and B, it can be seen that the addition of the vinylpyrrolidone polymer results in improved stability of the enzyme.

The endo beta-1,4-glucanase stability can be further improved using enzyme stabilisers known in the art.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A liquid laundry detergent composition comprising:
a) a surfactant system wherein the surfactant system comprises anionic surfactant, wherein the anionic surfactant comprises sulfonate anionic surfactant, wherein the sulfonate anionic surfactant is present at a level of at least 40% by weight of the surfactant system, and wherein the surfactant system comprises less than 3.0 % by weight of the composition of fatty acid;
b) an enzyme exhibiting endo beta-1,4-glucanase activity; and
c) a vinylpyrrolidone polymer selected from: polyvinylpyrrolidone (PVP), copolymers of vinylpyrrolidone and vinylimidazole (PVP/PVI), and mixtures thereof.

2. The liquid laundry detergent composition according to claim 1, wherein the vinylpyrrolidone polymer is present at a level of from 0.05% to 5.0%, preferably from 0.1% to 3.0%, and more preferably from 0.2% to 1.0%, by weight of the detergent composition.

3. The laundry detergent composition according to any preceding claim, wherein the vinylpyrrolidone polymer is a copolymer of vinylpyrrolidone and vinylimidazole (PVP/PVI).

4. The laundry detergent composition according to any preceding claim, wherein the composition comprises the surfactant system at a level of from 2.5 % to 60 %, preferably from 5.0 % to 25 %, more preferably from 7.0 % to 15 % by weight of the composition.

5. The laundry detergent composition according to any preceding claim, wherein the surfactant system comprises anionic surfactant at a level of from 2.0% to 50%, preferably from 4.0% to 25%, more preferably from 6.0% to 20.0% of the liquid laundry detergent composition.

6. The laundry detergent composition according to any preceding claim, wherein the sulfonate anionic surfactant is present at a level of from 40% to 90%, more preferably from 50% to 70% by weight of the surfactant system.

7. The laundry detergent composition according to any preceding claim, wherein the sulfonate anionic surfactant is present at a level of at least 55%, preferably from 60% to 90%, more preferably from 70% to 85% by weight of the anionic surfactant.

8. The laundry detergent composition according to any preceding claim, wherein the anionic surfactant comprises alkyl sulfate anionic surfactant and the sulfonate anionic surfactant and alkyl sulfate anionic surfactant are present in a weight ratio of from 55:45 to 99:1, preferably from 60:40 to 95:5, and most preferably from 70:30 to 85:15.

9. The laundry detergent composition according to any preceding claim, wherein the sulphonate anionic surfactant is selected form the group consisting of: alkylbenzene sulphonates, alkyl ester sulphonates, alkane sulphonates, alkyl sulphonated polycarboxylic acids, and mixtures thereof, preferably alkylbenzene sulphonates, more preferably C10-C16 alkylbenzene sulphonates.

10. The laundry detergent composition according to any preceding claim, wherein the composition comprises from 0.0001% to 0.1%, preferably from 0.0003% to 0.08%, more preferably from 0.0004% to 0.05%, and most preferably from 0.0005% to 0.02% by weight of the composition, of the endo-beta-1,4-glucanase enzyme.

11. The laundry detergent composition according to any preceding claim, wherein the enzyme exhibiting endo-beta-1,4-glucanase is a wild-type or variant of an enzyme encoded by the DNA of a microbial organism selected from fungi or bacteria.

12. The laundry detergent composition according to any one of the preceding claims, wherein the enzyme exhibiting endo-beta-1,4-glucanase belong to one of families 5, 6, 7, 8, 9, 10, 12, 26, 44, 45, 48, 51, 74, 124 and 148.

13. The laundry detergent composition according to any one of the preceding claims, wherein the enzyme exhibiting endo-beta-1,4-glucanase activity is a polypeptide having at least 60% sequence identity to the polypeptide of SEQ ID NO: 1, SEQ ID NO: 2, SEQ ID NO: 3, SEQ ID NO: 4, SEQ ID NO: 5 or SEQ ID NO: 6.

14. The laundry detergent composition according to claim 13, wherein the enzyme having endo-beta-1,4-glucanase activity is a polypeptide having at least 65%, at least 70%, at least 75%, at least 80%, at least 85%, at least 90%, at least 91%, at least 92%, at least 93%, at least 94%, at least 95%, at least 96%, at least 97%, at least 98%, at least 99%, or 100% sequence identity to the polypeptide of SEQ ID NO: 1, SEQ ID NO: 2, SEQ ID NO: 3, SEQ ID NO: 4, SEQ ID NO: 5 or SEQ ID NO: 6, or a fragment thereof having endo-beta-1,4-glucanase activity.

15. The laundry detergent composition according to claim 14, wherein the enzyme exhibiting endo-beta-1,4-glucanase activity is a polypeptide having at least 80%, at least 85%, at least 90%, at least 95%, at least 98%, at least 99% or 100% sequence identity to the mature polypeptide of SEQ ID NO: 4, or a fragment thereof having endo-beta-1,4-glucanase activity.
